# EUROPEAN PATENT APPLICATION

(11) **EP 4 539 303 A1**
(43) Date of publication of application: **16.04.2025**
(21) Application number: 23202350.7
(22) Date of filing: 09.10.2023
(51) Int. Cl.: H02K 1/20, H02K 9/04, H02K 9/19, H02K 1/16

(54) **ELECTRIC MACHINE**

(71) Applicant: ABB SCHWEIZ AG, 5400 Baden (CH)
(72) Inventor: Ikäheimo, Jouni, 65320 Vaasa (FI); Känsäkangas, Tero, 65320 Vaasa (FI); Brynjell-Rahkola, Mattias, 65320 Vaasa (FI)
(74) Representative: Kolster Oy Ab

(57) **Abstract**

An electric machine comprising a stator (2) comprising at least one coolant channel (4) extending through the stator (2) in a longitudinal direction, the at least one coolant channel (4) having an inlet opening (401) and an outlet opening (402), and a rotor (6) adapted to rotate relative to the stator (2) such that a rotation axis of the rotor (6) is parallel to the longitudinal direction. The stator (2) comprises at least one lateral aperture (8) located between the inlet opening (401) and outlet opening (402) in the longitudinal direction, and providing a fluid connection between the at least one coolant channel (4) and an outer surface of the stator (2).

## Description

### FIELD OF THE INVENTION

The present invention relates to an electric machine, and more particularly to cooling of the electric machine.

### BACKGROUND OF THE INVENTION

It is known in the art to cool an electric machine by blowing cool air through a rotor and stator of the electric machine in a longitudinal direction of electric machine. The cool air is adapted to flow through the stator in a plurality of coolant channels extending through the stator in the longitudinal direction.

### BRIEF DESCRIPTION OF THE INVENTION

An object of the present invention is to provide an electric machine with improved cooling. The objects of the invention are achieved by an electric machine which is characterized by what is stated in the independent claim. The preferred embodiments of the invention are disclosed in the dependent claims.

The invention is based on the idea of providing a stator with at least one lateral aperture which provides a fluid connection between a coolant channel extending through the stator in a longitudinal direction, and an outer surface of the stator, the at least one lateral aperture being an intermediate fluid connection located between an inlet opening and an outlet opening of the coolant channel in the longitudinal direction.

An advantage of the electric machine of the invention is that the at least one lateral aperture increases heat-exchange surface of the corresponding coolant channel thereby improving cooling of the stator.

### BRIEF DESCRIPTION OF THE DRAWINGS

In the following the invention will be described in greater detail by means of preferred embodiments with reference to the attached drawings, in which
Figure 1 shows an electric machine according to an embodiment of the invention;
Figure 2 shows a simplified cross section of the electric machine of Figure 1 from a direction perpendicular to a longitudinal direction of the electric machine;
Figure 3 shows a rotor, a stator winding, and a portion of a stator sheet stack of the electric machine of Figure 1; and
Figure 4 shows a stator sheet of the stator sheet stack of Figure 3 from a direction parallel to the longitudinal direction of the electric machine.

### DETAILED DESCRIPTION OF THE INVENTION

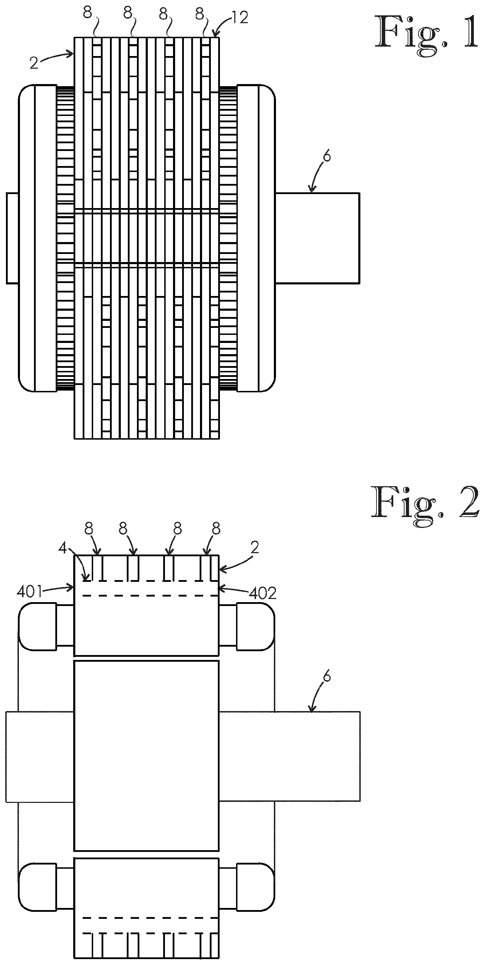

Figure 1 shows an electric machine according to an embodiment of the invention, and Figure 2 shows a simplified cross section of the electric machine from a direction perpendicular to a longitudinal direction of the electric machine. The electric machine comprises a stator 2, and a rotor 6 adapted to rotate relative to the stator 2. A rotation axis of the rotor 6 is parallel to the longitudinal direction.

The stator 2 comprises a plurality of stator sheets 12 stacked in the longitudinal direction as a stator sheet stack. In the simplified cross section shown in Figure 2, the sheet structure of the stator 2 has been omitted in order to make Figure 2 clearer. There is a plurality of coolant channels 4 extending through the stator 2 in the longitudinal direction. Each of the plurality of coolant channels 4 has an inlet opening 401 and an outlet opening 402 spaced apart in the longitudinal direction such that the inlet opening 401 is located at a first axial end of the stator 2, and the outlet opening 402 is located at a second axial end of the stator 2.

A thickness of each of the stator sheets 12 is 0.35mm. In an alternative embodiment, thickness of the stator sheets is less than or equal to 2.0mm. In another alternative embodiment, the stator does not comprise stacked stator sheets but is manufactured for example by 3D printing, or additive manufacturing.

The stator 2 comprises a plurality of lateral apertures 8 located between the inlet opening 401 and outlet opening 402 in the longitudinal direction. Each of the lateral apertures 8 provides a fluid connection between one coolant channel 4 and an outer surface of the stator 2. Each of the lateral apertures 8 extends in a radial direction relative to the rotation axis of the rotor 6. In Figure 2, the coolant channels 4 and the lateral apertures 8 are shown as simplified structures only depicting their principle.

The electric machine of Figure 1 is an air-cooled electric machine, which comprises a cooling fan (not shown) adapted to provide a coolant flow from the inlet opening 401 to the outlet opening 402. The stator 2 forms a portion of the frame of the electric machine such that an outer surface of stator 2 forms a portion of an outer surface of the entire electric machine. The cooling fan is adapted to push air into the coolant channels 4. In an alternative embodiment, the cooling fan is adapted to such air through the coolant channels.

In an alternative embodiment, the electric machine is a liquid cooled electric machine. The liquid cooled electric machine comprises a casing around the stator, the casing being adapted to retain the liquid coolant. There is an intermediate space between the stator and the casing such that the lateral apertures provide a fluid connection between the coolant channels and the intermediate space.

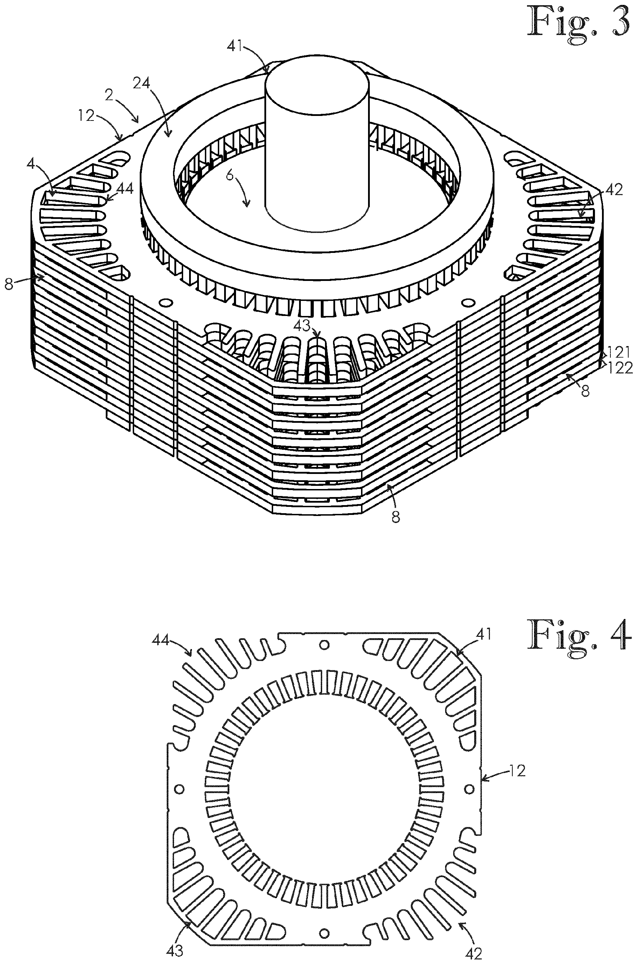

Figure 3 illustrates an internal structure of the electric machine of Figure 1 as seen from a direction oblique relative to the rotation axis of the rotor 6. In Figure 3, some of the components of the electric machine are omitted. The omitted components comprise end plates of the electric machine, and a portion of the stator sheets 12. Figure 4 shows a stator sheet 12 of the stator sheet stack from a direction parallel to the longitudinal direction of the electric machine.

The stator 2 comprises an active part, and the rotor 6 comprises an active part, wherein the active parts of the stator 2 and rotor 6 are adapted to interact magnetically during operation of the electric machine. The active part of the stator 2 has a first end and a second end spaced apart in the longitudinal direction, wherein the plurality of lateral apertures 8 is located between the first end and second end of the active part in the longitudinal direction. The active part of the stator 2 comprises a stator winding 24 partially shown in Figure 3 in a simplified form. The active part of the rotor 6 comprises a rotor winding (not shown).

The stator sheet stack comprises a plurality of stator sheet groups including a first stator sheet group 121 and a second stator sheet group 122. The first stator sheet group 121 and the second stator sheet group 122 are located successively in the stator sheet stack. The stator sheets 12 in the first stator sheet group 121 and second stator sheet group 122 are identical to each other, but there is an angular displacement between the first stator sheet group 121 and second stator sheet group 122. The angular displacement is 90°.

A cross section of the stator 2 taken along a plane perpendicular to the longitudinal direction has substantially a shape of a square. Electric machines provided with such a frame are sometimes called square frame machines. In alternative embodiments, a cross section of the stator has substantially a shape of a hexagon, octagon or circle, for example.

Figure 4 shows that the stator sheet 12 has four coolant channel aperture groups 41 to 44 each consisting of nine coolant channel apertures. Coolant channel aperture groups 41 and 43 are identical with each other, and coolant channel aperture groups 42 and 44 are identical with each other. Coolant channel aperture groups 41 and 43 are located on opposite sides of a centre axis of the stator sheet 12, and they are mirror images of each other with respect to a central plane on which the centre axis of the stator sheet 12 is located. Coolant channel aperture groups 42 and 44 are located on opposite sides of the centre axis of the stator sheet 12, and they are mirror images of each other with respect to the central plane.

The coolant channel apertures in the coolant channel aperture groups 41 and 43 are closed edge apertures which are completely surrounded by material of the stator sheet 12. The coolant channel apertures in the coolant channel aperture groups 42 and 44 are open edge apertures which are only partially surrounded by material of the stator sheet 12. Open edge sections of the coolant channel apertures form the lateral apertures 8 of the stator 2. Except for the radially outermost sections of the coolant channel apertures, all coolant channel aperture groups 41 to 44 are identical with each other.

The lateral apertures 8 provide additional heat transfer surfaces extending on planes perpendicular to the rotation axis of the rotor 6. When coolant flows through a lateral aperture 8, the coolant is in contact with the radially outermost sections of the closed edge apertures in the stator sheets 12 delimiting the lateral aperture 8 in the longitudinal direction. Therefore, cooling of the electric machine is not necessarily maximised by increasing surface area of lateral apertures but a number of the lateral apertures is also an important factor since increasing the number of the lateral apertures increases heat transfer surface area. In embodiments where the stator comprises a plurality of stator sheets stacked in the longitudinal direction as a stator sheet stack, using thinner stator sheets is one way to increase a number of lateral apertures per unit of length in the longitudinal direction.

Walls separating adjacent open edge coolant channel apertures from each other form cooling ribs on the outer surface of the stator. Coolant flowing between the coolant channels and the outer surface of the stator 2 is in contact with the cooling ribs. These cooling ribs increase heat transfer surface area of the stator 2, thereby improving cooling of the electric machine.

In the embodiment shown in Figure 3, both the first stator sheet group 121 and second stator sheet group 122 only has one stator sheet 12, and the stator sheet stack consists of identical stator sheets 12 stacked such that there is an angular displacement of 90° between successive stator sheets 12. In an alternative embodiment, each stator sheet group comprises a plurality of stator sheets located successively in the stator sheet stack. In another alternative embodiment, a number of stator sheets in the first stator sheet group is different than a number of stator sheets in the second stator sheet group.

Each coolant channel 4 is the only coolant channel between the rotation axis of the rotor 6 and a lateral aperture 8 which is in a fluid connection with the coolant channel 4. Shape of the coolant channels 4 differ from each other. Part of the coolant channels 4 have a shape whose dimension in the radial direction is greater than in a tangential direction. The coolant channel apertures located in the middle of each coolant channel aperture group, have a shape in which a ratio between a maximum radial dimension and a maximum tangential dimension is greater than 200%.

In an embodiment, a number and/or surface area of lateral apertures located in an outlet half of the stator is greater than a number and/or surface area of lateral apertures located in an inlet half of the stator, thereby at least partially compensating warming of coolant flowing through the coolant channels, and evening out a temperature difference between the outlet and inlet halves of the stator. Herein, the outlet half of the stator is the longitudinal half of the stator in which the outlet openings of the coolant channels are, and the inlet half of the stator is the longitudinal half of the stator in which the inlet openings of the coolant channels are. Different surface areas of lateral apertures located in different sections of the stator can be realized for example by using two types of stator sheets, wherein a first type stator sheet has more open edge coolant channel apertures than a second type stator sheet. The first type stator sheet can be the stator sheet 12 shown in Figure 4, and the second type stator sheet can be a stator sheet in which all coolant channel apertures are closed edge apertures.

The stator sheets 12 are made of electrical steel. In alternative embodiments, the stator sheets are made of another material with high thermal conductivity and adequate strength.

It will be obvious to a person skilled in the art that the inventive concept can be implemented in various ways. The invention and its embodiments are not limited to the examples described above but may vary within the scope of the claims.

## Claims

1. An electric machine comprising:
a stator (2) comprising at least one coolant channel (4) extending through the stator (2) in a longitudinal direction, the at least one coolant channel (4) having an inlet opening (401) and an outlet opening (402); and
a rotor (6) adapted to rotate relative to the stator (2) such that a rotation axis of the rotor (6) is parallel to the longitudinal direction,
**characterized in that** the stator (2) comprises at least one lateral aperture (8) located between the inlet opening (401) and outlet opening (402) in the longitudinal direction, and providing a fluid connection between the at least one coolant channel (4) and an outer surface of the stator (2).

2. The electric machine according to claim 1, wherein the stator (2) comprises a plurality of stator sheets (12) stacked in the longitudinal direction as a stator sheet stack.

3. The electric machine according to claim 2, wherein a thickness of each of the stator sheets (12) is less than or equal to 2.0mm.

4. The electric machine according to claim 2 or 3, wherein the stator sheet stack comprises a plurality of stator sheet groups including a first stator sheet group (121) and second stator sheet group (122) located successively in the stator sheet stack, and each of the stator sheet groups comprises at least one stator sheet located successively in the stator sheet stack, wherein stator sheets in each individual stator sheet group are identical to each other, and are in identical angular positions.

5. The electric machine according to claim 4, wherein the stator sheets (12) in the first stator sheet group (121) and second stator sheet group (122) are identical to each other, and there is an angular displacement between the first stator sheet group (121) and second stator sheet group (122).

6. The electric machine according to any one of claims 2 to 5, wherein the plurality of stator sheets (12) comprises at least ten stator sheets (12).

7. The electric machine according to any one of claims 2 to 6, wherein the stator sheets (12) are made of electrical steel.

8. The electric machine according to any one of preceding claims, wherein each coolant channel (4) which is in a fluid connection with a lateral aperture (8), is the only coolant channel between the rotation axis of the rotor (6) and the lateral aperture (8).

9. The electric machine according to any one of preceding claims, wherein at least part of the coolant channels (4) which are in a fluid connection with a lateral aperture (8), have a shape whose dimension in a radial direction is greater than in a tangential direction.

10. The electric machine according to claim 9, wherein at least part of the coolant channels (4) which are in a fluid connection with a lateral aperture (8), have a shape in which a ratio between a maximum radial dimension and a maximum tangential dimension is greater than or equal to 200%.

11. The electric machine according to any one of preceding claims, wherein the stator (2) comprises an active part, and the rotor (6) comprises an active part, wherein the active parts of the stator (2) and rotor (6) are adapted to interact magnetically during operation of the electric machine, and the active part of the stator (2) has a first end and a second end spaced apart in the longitudinal direction, wherein the at least one lateral aperture (8) is located between the first end and second end of the active part in the longitudinal direction.

12. The electric machine according to any one of preceding claims, wherein the electric machine comprises a coolant flow device adapted to provide a coolant flow from the inlet opening (401) to the outlet opening (402).
